# EUROPÄISCHE PATENTSCHRIFT

(11) **EP 3 469 620 B1**
(45) Veröffentlichungstag und Bekanntmachung des Hinweises auf die Patenterteilung: **12.02.2020**
(21) Anmeldenummer: 17725260.8
(22) Anmeldetag: 23.05.2017
(51) Int. Cl.: H01H 85/30, H01H 85/46, H02H 3/05, H02H 3/087, H02H 3/04

(54) **STROMVERTEILER UND SICHERUNGSSYSTEM FÜR EIN FAHRZEUG**
CURRENT DISTRIBUTOR AND PROTECTION SYSTEM FOR A VEHICLE
RÉPARTITEUR DE COURANT ET SYSTÈME DE SÉCURITÉ POUR UN VÉHICULE

(30) Priorität: 08.06.2016 DE 102016210058
(43) Veröffentlichungstag der Anmeldung: 17.04.2019
(73) Patentinhaber: Robert Bosch GmbH, 70442 Stuttgart (DE)
(72) Erfinder: LANG, Thomas, 72768 Reutlingen (DE)
(86) Internationale Anmeldenummer: PCT/EP2017/062429
(87) Internationale Veröffentlichungsnummer: WO 2017/211586

(56) Entgegenhaltungen:
- WO-A1-2010/004260
- DE-U1- 20 001 323
- US-A1- 2010 019 913

## Beschreibung

Die Erfindung geht aus von einem Stromverteiler für ein Fahrzeug nach der Gattung des unabhängigen Patentanspruchs 1 und von einem Sicherungssystem für ein Fahrzeug nach der Gattung des unabhängigen Patentanspruchs 7.

Aus dem Stand der Technik sind Stromverteiler für Fahrzeuge mit mehreren Lastkanälen, welche jeweils mit einer Sicherung abgesichert sind, und Sicherungssysteme für Fahrzeug mit einem solchen Stromverteiler bekannt, welche anstelle von Schmelzsicherungen und Relais integrierte Halbleiterschaltungen für die Darstellung von elektronischen Sicherungsfunktionen einsetzen.

Solche elektronischen Sicherungen umfassen in der Regel einen elektronischen Leistungsschalter zum Ein- und Abschalten einer angeschlossenen elektrischen Last und auch Elemente zur Darstellung von Schutzfunktionen bei Überstrom, Übertemperatur usw. In der Regel werden in solchen Stromverteilern alle Schmelzsicherungen durch elektronische Sicherungen ersetzt, da die elektronischen Sicherungen gegenüber den Schmelzsicherungen vorteilhafte Eigenschaften, wie beispielsweise programmierbare Sicherungskennlinien im Strom-ZeitDiagramm, präzise und sehr schnelle Auslösung, selektives Schalten von Lasten, Diagnosefunktionen wie beispielsweise Eigendiagnose, Strom-Spannungsmessung der Kanäle, erweiterte Kurzschlusserkennung (z.B. Diagnose Lichtbogen) usw. aufweisen. Im Wettbewerb zu den technischen Möglichkeiten, welche die elektronischen Sicherungen bieten, stehen die Kosten für die elektronischen Sicherungen, die im Vergleich zu einer simplen Schmelzsicherung eine wesentliche Kostensteigerung mit Faktor 20 bis 100 je Sicherung im Fahrzeug bedeuten.

Weitere gattungsgemäße Vorrichtungen sind in DE 20001323 U1, WO 2010/004260 A1 sowie US 2010/019913 A1 gezeigt.

### Offenbarung der Erfindung

Der Stromverteiler für ein Fahrzeug mit den Merkmalen des unabhängigen Patentanspruchs 1 und das Sicherungssystem für ein Fahrzeug mit den Merkmalen des unabhängigen Patentanspruchs 7 haben den Vorteil, dass jeder Lastkanal nach wie vor fest verdrahtet mit einer kostengünstigen konventionellen Schmelzsicherung ausgerüstet ist, wobei ein mit einer elektronischen Sicherung abgesicherter Ersatzkanal in einem Prüfmodus oder in einem Fehlerfall parallel zu den durch Schmelzsicherungen abgesicherten Lastkanälen geschaltet werden kann, um einen redundanten Strompfad aufzubauen.

Ausführungsformen der vorliegenden Erfindung liefern eine Lösung, bei der es möglich ist, eine erweiterte Absicherung mit einer geringeren Anzahl von elektronischen Sicherungen als erwartet darzustellen. Zusätzlich ergibt sich noch eine Reihe von weiteren Überwachungsfunktionen, um das Bordnetz betriebssicherer zu machen bzw. die Verfügbarkeit des Bordnetzes im Fehlerfall zu erhöhen. Bisher sind die konventionellen oder elektronischen Sicherungen in einem herkömmlichen Stromverteiler fest einem bestimmten Lastkanal zugeordnet und damit elektrisch fest mit diesem Lastkanal verbunden. Hat ein Stromverteiler beispielsweise n Lastkanäle, so werden mindestens n Sicherungselemente eingesetzt, um die n Lastkanäle abzusichern. Dabei können sich die n Sicherungselemente entweder aus n konventionellen Sicherungen oder aus n elektronischen Sicherungen oder aus einer Kombination dieser Sicherungselemente mit der Gesamtsumme von n Sicherungselementen zusammensetzen. Bei Ausführungsformen der vorliegenden Erfindung ist die Anzahl der flexibel einsetzbaren elektronischen Sicherungen wesentlich kleiner als die Anzahl der Schmelzsicherungen. So können beispielsweise für vier Lastkanäle vier kostengünstige Schmelzsicherungen und eine zusätzliche elektronische Sicherung eingesetzt werden. Ausführungsformen der vorliegenden Erfindung mit der zusätzlichen elektronischen Sicherung und einer zugehörigen Auswerte- und Steuereinheit stellen bei einer geringeren Kostensteigerung erweiterte Sicherungsfunktionen zur Verfügung, da nur eine elektronische Sicherung anstelle von vier elektronischen Sicherungen verwendet wird. Jedoch wird aus technischer Sicht eine erweiterte Funktionalität der Absicherung im seltenen Fehlerfall erreicht. Diese kann vorzugsweise zur Überwachung des redundanten Strompfades benutzt werden, wenn bereits ein Fehler vorliegt bzw. vorlag, welcher zum Auslösen einer Schmelzsicherung geführt hat.

Ausführungsformen der vorliegenden Erfindung stellen einen Stromverteiler für ein Fahrzeug zur Verfügung, welcher einen Eingang und mehrere Lastkanäle aufweist, welche den Eingang jeweils über eine Schmelzsicherung und eine Leitung mit einer angeschlossenen Last verbinden. Hierbei verbindet ein Ersatzkanal den Eingang über eine elektronische Sicherung mit den angeschlossenen Lasten, wobei eine Auswerte- und Steuereinheit die Schmelzsicherungen auf Funktionsfähigkeit überprüft und einen Halbleiterschalter der elektronischen Sicherung leitend schaltet und über den Ersatzkanal einen redundanten Strompfad zwischen dem Eingang und den angeschlossenen Lasten ausbildet, wenn zumindest eine der Schmelzsicherungen als ausgelöst erkannt ist.

Zudem wird ein Sicherungssystem für ein Fahrzeug, mit einer Spannungsquelle, welche über eine Hauptleitung eine Bordnetzspannung zur Verfügung stellt, und einem solchen Stromverteiler vorgeschlagen, welcher die Bordnetzspannung an mehrere angeschlossene Lasten anlegt.

Die Erfindung geht von der Überlegung aus, dass die Wahrscheinlichkeit, dass in einem Fahrzeugbordnetz ein Fehler (z.B. Überstrom, Kurzschluss) auftritt, bei welchem eine Trennung von Lastkanälen unumgänglich ist, sehr gering ist. Daher muss nicht jeder Lastkanal permanent durch eine kostenintensive elektronische Sicherung abgesichert werden. Zudem kann die Tatsache ausgenutzt werden, dass die Spannung in einem Fahrzeugbordnetz nicht konstant ist, sondern aufgrund der elektrischen Belastung innerhalb einer Bandbreite schwankt. Dieser Effekt kann ausgenutzt werden, um eine wiederkehrende selektive Überprüfung der Funktionsfähigkeit der Schmelzsicherungen und der elektronischen Sicherung durchzuführen. So kann ein solcher Prüfmodus beispielsweise immer dann ausgelöst, werden, wenn die Bordnetzspannung einen vorgegebenen Schwellwert übersteigt.

Im Falle einer defekten Sicherung wird der Halbleiterschalter der elektronischen Sicherung permanent leitend geschaltet, so dass die defekte Schmelzsicherung überbrückt und der so entstandenen alternative Strompfad mittels erweiterter Diagnosefunktionen "präzise" überwacht werden kann, bis die defekte Sicherung getauscht wird. Die Auswerte- und Steuereinheit sorgt zusätzlich dafür, dass in einem Prüfmodus der Halbleiterschalter zyklisch eingeschaltet und auf seine Funktionsfähigkeit hin überwacht wird. Ausführungsformen der Erfindung behalten dazu die konventionellen Schmelzsicherungen in einem mehrkanaligen Stromverteiler bei und kombinieren diese mit einer einzigen elektronischen Sicherung für alle Lastkanäle oder zumindest für eine vorgegebene Anzahl von Lastkanälen. So dass nicht jeder Lastkanal einzeln mit einer elektronischen Sicherung abgesichert werden muss. Die elektronische Sicherung übernimmt nur im Fehlerfall und bis zum Sicherungswechsel die Sicherungsfunktion. Zudem ist die elektronische Sicherung in der Lage, bei einem Ausfall einer der Schmelzsicherungen im Stromverteiler den Strom zu den angeschlossenen elektrischen Lasten zu führen und mittels einer Diagnose zu überwachen. Die Auswerte- und Steuereinheit überprüft jeden Lastkanal in eine bestimmten Reihenfolge und Häufigkeit und kann erkennen. In welchem Lastkanal die Schmelzsicherung ausgelöst bzw. durchgebrannt ist. Die Gefahr des Durchlegierens der Halbleiterschalter wird herabgesetzt, da diese im Prüfmodus nicht ständig mit Strom beaufschlagt sind. Dadurch kann eine FIT-(failure-in-time) Rate reduziert und die Sicherheit im Fahrzeug (Redundanz) und die Bordnetzverfügbarkeit erhöht werden. Da die elektronische Sicherung im Normalbetrieb abgeschaltet ist und nur in seltenen Fällen den vollen Arbeitsstrom tragen muss, ist eine höhere Verlustleistung zulässig. Der Einschaltwiderstand des Halbleiterschalters kann damit hochohmiger gewählt werden, was die Kosten für den Halbleiterschalter senkt.

Unter der Auswerte- und Steuereinheit kann vorliegend ein elektrisches Gerät, wie beispielsweise ein Steuergerät verstanden werden, welches erfasste Sensorsignale verarbeitet bzw. auswertet. Die Auswerte- und Steuereinheit kann mindestens eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Auswerte- und Steuereinheit beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung der Auswertung verwendet wird, wenn das Programm von der Auswerte- und Steuereinheit ausgeführt wird.

Durch die in den abhängigen Ansprüchen aufgeführten Maßnahmen und Weiterbildungen sind vorteilhafte Verbesserungen des im unabhängigen Patentanspruch 1 angegebenen Stromverteilers für ein Fahrzeug und des im unabhängigen Patentanspruch 7 angegebenen Sicherungssystems für ein Fahrzeug möglich.

Besonders vorteilhaft ist, dass die Auswerte- und Steuereinheit den Stromfluss im Ersatzkanal beispielsweise mittels eines Strommessers in Hinblick auf einen Überstromfall überprüfen kann. Die Schmelzsicherung kann den Stromfluss im zugehörigen Lastkanal aus zwei Gründen unterbrochen haben. In einem ersten Fall kann die Schmelzsicherung defekt und durchgebrannt sein, ohne dass ein Überstromfall vorliegt. In einem zweiten Fall kann die Schmelzsicherung aufgrund eines unerlaubten Überstroms korrekt ausgelöst und durchgebrannt sein. Daher kann die Auswerte- und Steuereinheit die zumindest eine ausgelöste Schmelzsicherung als ausgelöst bewerten, wenn ein Überstromfall vorliegt oder als defekt bewerten, wenn kein Überstromfall vorliegt. Des Weiteren kann die Auswerte- und Steuereinheit den Halbleiterschalter im leitenden Zustand belassen und den redundanten Strompfad über den Ersatzkanal aufrechterhalten, wenn die ausgelöste Schmelzsicherung als defekt bewertet ist. Das bedeutet, dass kein Überstromfall sondern eine defekte Schmelzsicherung vorliegt. Alternativ kann die Auswerte- und Steuereinheit den Halbleiterschalter sperrend schalten und den redundanten Strompfad über den Ersatzkanal auftrennen, wenn die ausgelöste Schmelzsicherung als ausgelöst bewertet ist. Das bedeutet, dass ein Überstromfall vorliegt und die Schmelzsicherung zu Recht ausgelöst hat.

In vorteilhafter Ausgestaltung des Stromverteilers kann jeweils für eine vorgebbare Anzahl von Lastkanälen ein Ersatzkanal vorgesehen werden. Dadurch kann der maximale Laststrom im Ersatzkanal, welcher über die elektronische Sicherung fließt, in vorteilhafter Weise vorab abgeschätzt und ein entsprechender Halbleiterschalter ausgesucht werden, da im ungünstigsten Fall alle Schmelzsicherungen der Lastkanäle defekt sind und die erforderlichen Ströme zur Versorgung der angeschlossenen Lasten über den Halbleiterschalter der elektronischen Sicherung fließen müssen.

In weiterer vorteilhafter Ausgestaltung des Stromverteilers kann die Auswerte- und Steuereinheit eine erste Spannung vor und eine zweite Spannung nach der jeweiligen Schmelzsicherung ermitteln und miteinander vergleichen, um die Funktionsfähigkeit der Schmelzsicherungen zu überprüfen. Hierbei kann die Auswerte- und Steuerschaltung eine ausgelöste Schmelzsicherung erkennen, wenn sich die erste Spannung von der zweiten Spannung unterscheidet.

In vorteilhafter Ausgestaltung des Sicherungssystems kann mindestens eine Sicherheitsfunktion die Auswerte- und Steuereinheit zyklisch und/oder bei Vorliegen von mindestens einen vorgegebenen Kriterium in einen Prüfmodus schalten, in welchem die Auswerte- und Steuereinheit die Schmelzsicherungen und die elektronische Sicherung des Stromverteilers auf Funktionsfähigkeit überprüfen kann.

In weiterer vorteilhafter Ausgestaltung des Sicherungssystems kann die Auswerte- und Steuereinheit den Halbleiterschalter nach einer Überprüfung der Schmelzsicherungen leitend schaltet und einen korrespondierenden Stromfluss im Ersatzkanal erfassen und auswerten, wenn alle Schmelzsicherungen als funktionsfähig bewertet sind, wobei ein erkannter Stromfluss im Ersatzkanal einen fehlerfreien Halbleiterschalter repräsentieren kann.

In weiterer vorteilhafter Ausgestaltung des Sicherungssystems kann die Auswerte- und Steuereinheit eine defekte Schmelzsicherung und/oder einen defekte Halbleiterschalter an die mindestens eine Sicherheitsfunktion melden. Hierbei kann die Sicherheitsfunktion bei zumindest einer als defekt bewerteten Schmelzsicherung die Auswerte- und Steuerschaltung in einen Arbeitsmodus schalten, in welchem die Auswerte- und Steuereinheit den Stromfluss im Ersatzkanal überwachen und den redundanten Strompfad über den Ersatzkanal aufrechterhalten oder im Überstromfall auftrennen kann. Dadurch kann eine übergeordnete Sicherheitsfunktion entscheiden, ob der nachfolgende Arbeitsmoduls zulässig ist oder das Fahrzeug schnellstmöglich abgestellt werden sollte.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

Fig. 1 zeigt ein schematisches Blockdiagramm eines Ausführungsbeispiels eines erfindungsgemäßen Sicherungssystems für ein Fahrzeug mit einem Ausführungsbeispiel eines erfindungsgemäßen Stromverteilers mit n Lastkanälen.
Fig. 2 zeigt ein schematisches Blockdiagramm eines Ausführungsbeispiels eines erfindungsgemäßen Sicherungssystems für ein Fahrzeug mit einem Ausführungsbeispiel eines erfindungsgemäßen Stromverteilers mit drei Lastkanälen.

### Ausführungsformen der Erfindung

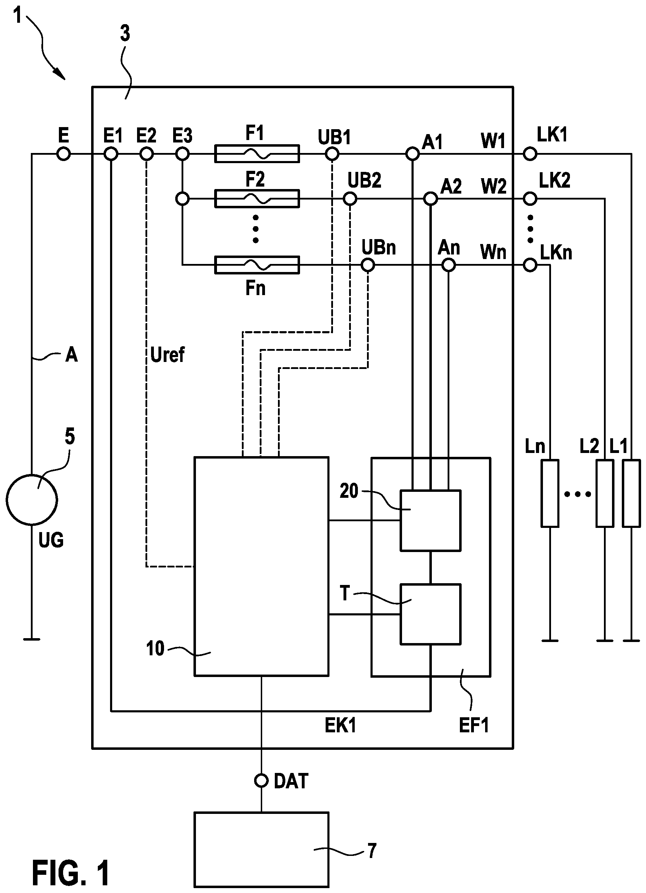

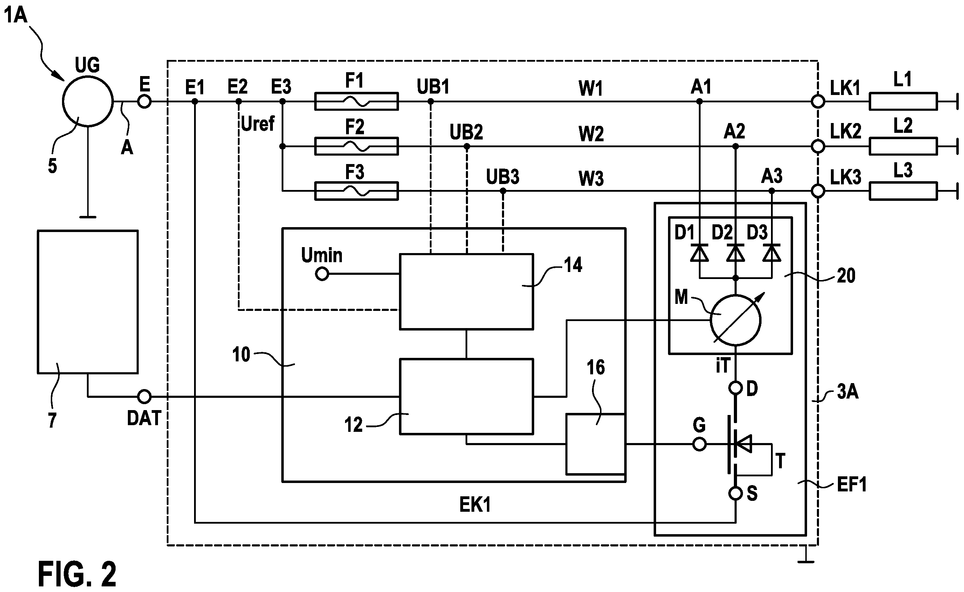

Wie aus Fig. 1 und 2 ersichtlich ist, umfassen die dargestellten Ausführungsbeispiele eines erfindungsgemäßen Sicherungssystems 1, 1A für ein Fahrzeug jeweils eine Spannungsquelle 5, welche über eine Hauptleitung A eine Bordnetzspannung UG zur Verfügung stellt, und einen Stromverteiler 3, 3A, welcher die Bordnetzspannung UG an mehrere angeschlossene Lasten L1, L2, L3, Ln anlegt.

Wie aus Fig. 1 und 2 weiter ersichtlich ist, umfassen die dargestellten Ausführungsbeispiele eines erfindungsgemäßen Stromverteilers 3, 3A für ein Fahrzeug jeweils einem Eingang E und mehrere Lastkanäle LK1, LK2, LK3, LKn, welche den Eingang E jeweils über eine Schmelzsicherung F1, F2, F3, Fn und eine Leitung W1, W2, W3, Wn mit einer angeschlossenen Last L1, L2, L3, Ln verbinden. Hierbei verbindet ein Ersatzkanal EK1 den Eingang E über eine elektronische Sicherung EF1 mit den angeschlossenen Lasten L1, L2, L3, Ln. Eine Auswerte- und Steuereinheit 10 überprüft die Schmelzsicherungen F1, F2, F3, Fn auf Funktionsfähigkeit und schaltet einen Halbleiterschalter T der elektronischen Sicherung EF1 leitend und bildet über den Ersatzkanal EK1 einen redundanten Strompfad zwischen dem Eingang E und den angeschlossenen Lasten L1, L2, L3, Ln aus, wenn zumindest eine der Schmelzsicherungen F1, F2, F3, Fn als ausgelöst erkannt ist.

Wie aus Fig. 1 und 2 weiter ersichtlich ist, schaltet mindestens eine Sicherheitsfunktion 7 die Auswerte- und Steuereinheit 10 zyklisch und/oder bei Vorliegen von mindestens einem vorgegebenen Kriterium in einen Prüfmodus, in welchem die Auswerte- und Steuereinheit 10 die Schmelzsicherungen F1, F2, F3, Fn und die elektronische Sicherung EF1 des Stromverteilers 3, 3A auf Funktionsfähigkeit überprüft. Wenn alle Schmelzsicherungen F1, F2, F3, Fn als funktionsfähig bewertet sind, schaltet die Auswerte- und Steuereinheit 10 in den dargestellten Ausführungsbeispielen den Halbleiterschalter T nach der Überprüfung der Schmelzsicherungen F1, F2, F3, Fn leitend und erfasst einen korrespondierenden Stromfluss iT im Ersatzkanal EK1 und wertet diesen aus. Hierbei repräsentiert ein erkannter Stromfluss iT im Ersatzkanal EK1 einen fehlerfreien Halbleiterschalter T. Zudem meldet die Auswerte- und Steuereinheit 10 eine defekte Schmelzsicherung F1, F2, F3, Fn und/oder einen defekte Halbleiterschalter T an die mindestens eine Sicherheitsfunktion 7. Die Sicherheitsfunktion 7 schaltet bei zumindest einer als defekt bewerteten Schmelzsicherung F1, F2, F3, Fn die Auswerte- und Steuerschaltung 10 in einen Arbeitsmodus, in welchem die Auswerte- und Steuereinheit 10 den Stromfluss iT im Ersatzkanal EK1 überwacht und den redundanten Strompfad über den Ersatzkanal EK1 aufrechterhält oder im Überstromfall auftrennt.

Wie aus Fig. 1 und 2 weiter ersichtlich ist, zweigt der Ersatzkanal EK1 am Eingangsknotenpunkt E1 ab und wird über die elektronische Sicherung EF1, welche den Halbleiterschalter T und eine Strommesseinheit 20 umfasst, zu Ausgangsknotenpunkten A1, A2, A3, An der Leitungen W1, W2, W3, Wn der einzelnen Lastkanäle LK1, LK2, LK3, LKn geführt. Dadurch ist der Ersatzkanal EK1 in der Lage, jede der Schmelzsicherungen F1, F2, F3, Fn in den verschiedenen Lastkanälen LK1, LK2, LK3, LKn zu überbrücken, welche an einem Eingangsknoten E3 abzweigen.

Wie aus Fig. 1 und 2 weiter ersichtlich ist, überprüft die Auswerte- und Steuereinheit 10 den Stromfluss iT im Ersatzkanal EK1 in Hinblick auf einen Überstromfall. Die Auswerte- und Steuereinheit 10 bewertet die zumindest eine ausgelöste Schmelzsicherung F1, F2, F3, Fn als ausgelöst, wenn ein Überstromfall vorliegt. Alternativ bewertet die Auswerte- und Steuereinheit 10 die zumindest eine ausgelöste Schmelzsicherung F1, F2, F3, Fn als defekt, wenn kein Überstromfall vorliegt. Die Auswerte- und Steuereinheit 10 belässt den Halbleiterschalter T im leitenden Zustand und erhält den redundanten Strompfad über den Ersatzkanal EK1 aufrecht, wenn die ausgelöste Schmelzsicherung F1, F2, F3, Fn als defekt bewertet ist. Alternativ schaltet die Auswerte- und Steuereinheit 10 den Halbleiterschalter T sperrend und trennt den redundanten Strompfad über den Ersatzkanal EK1 auf, wenn die ausgelöste Schmelzsicherung F1, F2, F3, Fn als ausgelöst bewertet ist.

Zur Überprüfung der Schmelzsicherungen F1, F2, F3, Fn ermittelt die Auswerte- und Steuereinheit 10 eine erste Spannung Uref vor und eine zweite Spannung UB1, UB2, UB3, UBn nach der jeweiligen Schmelzsicherung F1, F2, F3, Fn und vergleicht diese miteinander. Hierbei wird die erste Spannung Uref an einem Eingangsknoten E2 abgegriffen. Die Auswerte- und Steuerschaltung 10 erkennt eine ausgelöste Schmelzsicherung F1, F2, F3, Fn, wenn sich die erste Spannung Uref von der zweiten Spannung UB1, UB2, UB3, UBn unterscheidet.

Wie aus Fig. 2 weiter ersichtlich ist, ist im dargestellten Ausführungsbeispiel für eine vorgebbare Anzahl von drei Lastkanälen LK1, LK2, LK3 ein Ersatzkanal EK1 vorgesehen. Zusätzlich zur Aktivierung durch die mindestens eine Sicherheitsfunktion 7, schaltet sich die Auswerte- und Steuereinheit 10 im dargestellten Ausführungsbeispiel in den Prüfmodus, wenn die erste Spannung Uref einen vorgegebenen Schwellwert Umin übersteigt. Wie aus Fig. 2 weiter ersichtlich ist, umfasst die Auswerte- und Steuereinheit 10 eine Vergleichseinheit 14, welche die zweiten Spannungen UB1, UB2, UB3 und den Schwellwert Umin mit der ersten Spannung Uref vergleicht und eine Auswerteschaltung 12, welche die Vergleichsprozesse auswertet und das Auswerteergebnis über einen Datenkanal DAT an die mindestens eine Sicherungsfunktion 7 ausgibt. Zudem kann die Auswerte- und Steuereinheit 10 bzw. die Auswerteschaltung 12 über den Datenkanal DAT Steuerbefehle von der mindestens einen Sicherungsfunktion 7 empfangen. Zudem kann die Auswerteschaltung 12 den Halbleiterschalter T über einen Ausgangstreiber 16 leitend oder sperrend schalten. Wie aus Fig. 2 weiter ersichtlich ist, ist ein Sourceanschluss S des Halbleiterschalters T mit dem Eingangsknoten E1 verbunden, ein Gateanschluss G des Halbleiterschalters T ist mit dem Ausgangstreiber 16 verbunden und ein Drainanschluss D des Halbleiterschalters T ist mit der Strommesseinheit 20 verbunden. Die Strommesseinheit 20 umfasst einen Strommesser M, dessen Ausgang mit der Auswerteschaltung 12 verbunden ist. Zudem umfasst die Strommesseinheit 20 drei Dioden D1, D2, D3. Hierbei koppelt eine erste Diode D1 den Ersatzkanal EK1 mit einem ersten Ausgangsknoten A1 einer ersten Leitung W1 eines ersten Lastkanals LK1, eine zweite Diode D2 koppelt den Ersatzkanal EK1 mit einem zweiten Ausgangsknoten A2 einer zweiten Leitung W2 eines zweiten Lastkanals LK2, und eine dritte Diode D3 koppelt den Ersatzkanal EK1 mit einem dritten Ausgangsknoten A3 einer dritten Leitung W3 eines dritten Lastkanals LK3.

Ausführungsformen der vorliegenden Erfindung aktivieren zyklisch den Prüfmodus der Auswerte- und Steuereinheit 10. Dadurch werden die Schmelzsicherungen F1, F2, F3, Fn zyklisch überwacht und zusätzlich wird der Zustand des Halbleiterschalters T der elektronischen Sicherung EF1 überwacht. Liegt ein Fehler in mindestens einer der Schmelzsicherungen F1, F2, F3, Fn vor (Sicherung ist durchgebrannt), schaltet die Auswerte- und Steuereinheit 10 in den Arbeitsmodus. Zudem gibt die Auswerte- und Steuereinheit 10 eine entsprechende Meldung, welche der Schmelzsicherungen F1, F2, F3, Fn konkret ausgefallen ist, an die mindestens eine Sicherungsfunktion 7 über den Datenkanal DAT aus.

Ist ein Fehler im Halbleiterschalter T gefunden worden, wird der Fehler ebenfalls an die mindestens eine Sicherungsfunktion 7 ausgegeben. Die mindestens eine Sicherungsfunktion 7 entscheidet, ob ein nachfolgender Arbeitszyklus zulässig ist oder das Fahrzeug schnellstmöglich abgestellt werden muss. So kann das Fahrzeug beispielsweise bis zum Ersatz des Halbleiterschalters T abgeschaltet werden, da bei einer defekten Schmelzsicherung F1, F2, F3, Fn kein alternativer Strompfad über den Ersatzkanal EK1 und Halbleiterschalter T mehr zur Verfügung steht.

Im Arbeitsmodus ersetzt die elektronische Sicherung EF1 die zumindest eine ausgelöste Schmelzsicherung F1, F2, F3, Fn in ihrer Funktion, trägt den Strom zu den elektrischen Lasten L1, L2, L3, Ln und die Auswerte- und Steuereinheit 10 überwacht den Stromfluss iT im Ersatzkanal EK1. Im Falle einer unzulässigen Stromhöhe oder Übertemperatur schaltet die Auswerte- und Steuereinheit 10 den Stromfluss iT im Ersatzkanal EK1 über den Halbleiterschalter T ab. Zudem gibt die Auswerte- und Steuereinheit 10 eine entsprechend Meldung über den Datenkanal DAT an die mindestens eine Sicherungsfunktion 7 aus. Die mindestens eine Sicherungsfunktion 7 legt fest, ob und wie lange das Fahrzeug aufgrund des Fehlers bzw. der Fehler weiterbetrieben werden kann. Der Halbleiterschalter T ist in vorteilhafter Weise so ausgelegt, dass er den Strom alle Lastkanäle LK1, LK2, LK3, LKn für eine bestimmte Zeit tragen kann.

Ausführungsformen der Erfindung können in intelligenten Stromverteilern eingesetzt werden, da sie kostengünstigen Varianten eines hybriden Stromverteilers, welcher Schmelzsicherungen und elektronische Sicherungen umfasst, für eine redundante Energieversorgung im Bordnetz darstellen.

## Patentansprüche

1. Stromverteiler (3, 3A) für ein Fahrzeug, mit einem Eingang (E) und mehreren Lastkanälen (LK1, LK2, LK3, LKn), welche den Eingang (E) jeweils über eine Schmelzsicherung (F1, F2, F3, Fn) und eine Leitung (W1, W2, W3, Wn) mit einer angeschlossenen Last (L1, L2, L3, Ln) verbinden, **dadurch gekennzeichnet, dass** ein Ersatzkanal (EK1) den Eingang (E) über eine elektronische Sicherung (EF1) mit den angeschlossenen Lasten (L1, L2, L3, Ln) verbindet, wobei eine Auswerte- und Steuereinheit (10) die Schmelzsicherungen (F1, F2, F3, Fn) auf Funktionsfähigkeit überprüft und einen Halbleiterschalter (T) der elektronischen Sicherung (EF1) leitend schaltet und über den Ersatzkanal (EK1) einen redundanten Strompfad zwischen dem Eingang (E) und den angeschlossenen Lasten (L1, L2, L3, Ln) ausbildet, wenn zumindest eine der Schmelzsicherungen (F1, F2, F3, Fn) als ausgelöst erkannt ist.

2. Stromverteiler nach Anspruch 1, **dadurch gekennzeichnet, dass** die Auswerte- und Steuereinheit (10) den Stromfluss (iT) im Ersatzkanal (EK1) in Hinblick auf einen Überstromfall überprüft, wobei die Auswerte- und Steuereinheit (10) die zumindest eine ausgelöste Schmelzsicherung (F1, F2, F3, Fn) als ausgelöst bewertet, wenn ein Überstromfall vorliegt oder als defekt bewertet, wenn kein Überstromfall vorliegt.

3. Stromverteiler nach Anspruch 2, **dadurch gekennzeichnet, dass** die Auswerte- und Steuereinheit (10) den Halbleiterschalter (T) im leitenden Zustand belässt und den redundanten Strompfad über den Ersatzkanal (EK1) aufrechterhält, wenn die ausgelöste Schmelzsicherung (F1, F2, F3, Fn) als defekt bewertet ist, oder den Halbleiterschalter (T) sperrend schaltet und den redundanten Strompfad über den Ersatzkanal (EK1) auftrennt, wenn die ausgelöste Schmelzsicherung (F1, F2, F3, Fn) als ausgelöst bewertet ist.

4. Stromverteiler nach einem der Ansprüche 1 bis 3, **dadurch gekennzeichnet, dass** jeweils für eine vorgebbare Anzahl von Lastkanälen (LK1, LK2, LK3, LKn) ein Ersatzkanal (EK1) vorgesehen ist.

5. Stromverteiler nach einem der Ansprüche 1 bis 4, **dadurch gekennzeichnet, dass** die Auswerte- und Steuereinheit (10) eine erste Spannung (Uref) vor und eine zweite Spannung (UB1, UB2, UB3, UBn) nach der jeweiligen Schmelzsicherung (F1, F2, F3, Fn) ermittelt und miteinander vergleicht.

6. Stromverteiler nach Anspruch 5, **dadurch gekennzeichnet, dass** die Auswerte- und Steuerschaltung (10) eine ausgelöste Schmelzsicherung (F1, F2, F3, Fn) erkennt, wenn sich die erste Spannung (Uref) von der zweiten Spannung (UB1, UB2, UB3, UBn) unterscheidet.

7. Sicherungssystem (1, 1A) für ein Fahrzeug, mit einer Spannungsquelle (5), welche über eine Hauptleitung (A) eine Bordnetzspannung (UG) zur Verfügung stellt, und einem Stromverteiler (3, 3A), welcher die Bordnetzspannung an mehrere angeschlossene Lasten (L1, L2, L3, Ln) anlegt, **dadurch gekennzeichnet, dass** der Stromverteiler (3, 3A) nach zumindest einem der Ansprüche 1 bis 6 ausgeführt ist.

8. Sicherungssystem nach Anspruch 7, **dadurch gekennzeichnet, dass** mindestens eine Sicherheitsfunktion (7) die Auswerte- und Steuereinheit (10) zyklisch und/oder bei Vorliegen von mindestens einen vorgegebenen Kriterium in einen Prüfmodus schaltet, in welchem die Auswerte- und Steuereinheit (10) die Schmelzsicherungen (F1, F2, F3, Fn) und die elektronische Sicherung (EF1) des Stromverteilers (3, 3A) auf Funktionsfähigkeit überprüft.

9. Sicherungssystem nach Anspruch 8, **dadurch gekennzeichnet, dass** die Auswerte- und Steuereinheit (10) den Halbleiterschalter (T) nach einer Überprüfung der Schmelzsicherungen (F1, F2, F3, Fn) leitend schaltet und einen korrespondierenden Stromfluss (iT) im Ersatzkanal (EK1) erfasst und auswertet, wenn alle Schmelzsicherungen (F1, F2, F3, Fn) als funktionsfähig bewertet sind, wobei ein erkannter Stromfluss (iT) im Ersatzkanal (EK1) einen fehlerfreien Halbleiterschalter (T) repräsentiert.

10. Sicherungssystem nach Anspruch 8 oder 9, **dadurch gekennzeichnet, dass** die Auswerte- und Steuereinheit (10) eine defekte Schmelzsicherung (F1, F2, F3, Fn) und/oder einen defekte Halbleiterschalter (T) an die mindestens eine Sicherheitsfunktion (7) meldet, wobei die Sicherheitsfunktion (7) bei zumindest einer als defekt bewerteten Schmelzsicherung (F1, F2, F3, Fn) die Auswerte- und Steuerschaltung (10) in einen Arbeitsmodus schaltet, in welchem die Auswerte- und Steuereinheit (10) den Stromfluss (iT) im Ersatzkanal (EK1) überwacht und den redundanten Strompfad über den Ersatzkanal (EK1) aufrechterhält oder im Überstromfall auftrennt.

## Claims

1. Current distributor (3, 3A) for a vehicle, having an input (E) and a plurality of load channels (LK1, LK2, LK3, LKn) which connect the input (E) to a connected load (L1, L2, L3, Ln) via a safety fuse (F1, F2, F3, Fn) and a line (W1, W2, W3, Wn) in each case,
**characterized in that** a standby channel (EK1) connects the input (E) to the connected loads (L1, L2, L3, Ln) via an electronic fuse (EF1), wherein an evaluation and control unit (10) monitors the safety fuses (F1, F2, F3, Fn) for functionality and switches a semiconductor switch (T) of the electronic fuse (EF1) to the conducting state and forms a redundant current path between the input (E) and the connected loads (L1, L2, L3, Ln) via the standby channel (EK1) if at least one of the safety fuses (F1, F2, F3, Fn) is identified as having been tripped.

2. Current distributor according to Claim 1, **characterized in that** the evaluation and control unit (10) monitors the current flow (iT) in the standby channel (EK1) for an overcurrent fault, wherein the evaluation and control unit (10) evaluates the at least one tripped fuse (F1, F2, F3, Fn) as having been tripped if an overcurrent fault is present or evaluates it as defective if no overcurrent fault is present.

3. Current distributor according to Claim 2, **characterized in that** the evaluation and control unit (10) leaves the semiconductor switch (T) in the conducting state and maintains the redundant current path through the standby channel (EK1) if the tripped safety fuse (F1, F2, F3, Fn) is evaluated as defective, or switches the semiconductor switch (T) to the blocking state and disconnects the redundant current path through the standby channel (EK1) if the tripped safety fuse (F1, F2, F3, Fn) is evaluated as having been tripped.

4. Current distributor according to any one of Claims 1 to 3, **characterized in that** for a specifiable number of load channels (LK1, LK2, LK3, LKn) one standby channel (EK1) is provided in each case.

5. Current distributor according to any one of Claims 1 to 4, **characterized in that** the evaluation and control unit (10) determines a first voltage (Uref) before and a second voltage (UB1, UB2, UB3, UBn) after the respective safety fuse (F1, F2, F3, Fn) and compares them with each other.

6. Current distributor according to Claim 5, **characterized in that** the evaluation and control circuit (10) identifies a tripped safety fuse (F1, F2, F3, Fn) if the first voltage (Uref) differs from the second voltage (UB1, UB2, UB3, UBn).

7. Protection system (1, 1A) for a vehicle, having a voltage source (5), which provides an on-board power supply voltage (UG) via a main line (A), and a current distributor (3, 3A) which applies the on-board power supply voltage to a plurality of connected loads (L1, L2, L3, Ln), **characterized in that** the current distributor (3, 3A) is embodied according to at least one of Claims 1 to 6.

8. Protection system according to Claim 7, **characterized in that** at least one protection function (7) switches the evaluation and control unit (10) cyclically and/or upon the presence of at least one specified criterion into a test mode, in which the evaluation and control unit (10) monitors the safety fuses (F1, F2, F3, Fn) and the electronic fuse (EF1) of the current distributor (3, 3A) for functionality.

9. Protection system according to Claim 8, **characterized in that** the evaluation and control unit (10), after monitoring the safety fuses (F1, F2, F3, Fn), switches the semiconductor switch (T) into a conducting state and detects and evaluates a corresponding current flow (iT) in the standby channel (EK1) if all the safety fuses (F1, F2, F3, Fn) are evaluated as functional, wherein a detected current flow (iT) in the standby channel (EK1) represents a fault-free semiconductor switch (T).

10. Protection system according to Claim 8 or 9, **characterized in that** the evaluation and control unit (10) signals a defective safety fuse (F1, F2, F3, Fn) and/or a defective semiconductor switch (T) to the at least one protection function (7), wherein in the event of at least one safety fuse (F1, F2, F3, Fn) being evaluated as defective, the safety function (7) switches the evaluation and control circuit (10) into an operating mode in which the evaluation and control unit (10) monitors the current flow (iT) in the standby channel (EK1) and either maintains the redundant current path through the standby channel (EK1) or disconnects it in the event of an overcurrent fault.

## Revendications

1. Répartiteur de courant (3, 3A) pour un véhicule, pourvu d'une entrée (E) et de plusieurs canaux de charge (LK1, LK2, LK3, LKn) qui relient respectivement l'entrée (E) par l'intermédiaire d'un fusible (F1, F2, F3, Wn) et d'une ligne (W1, W2, W3, Wn) à un une charge connectée (L1, L2, L3, LN), **caractérisé en ce qu'**un canal de rechange (EK1) relie l'entrée (E) par l'intermédiaire d'un fusible électronique (EF1) aux charges connectées (L1, L2, L3, Ln), dans lequel une unité d'évaluation et de commande (10) vérifie le bon état de fonctionnement des fusibles (F1, F2, F3, Fn) et rend conducteur un commutateur semi-conducteur (T) du fusible électronique (BF1) et établit, par l'intermédiaire du canal de rechange (EK1), un trajet de courant redondant entre l'entrée (E) et les charges connectées (L1, L2, L3, Ln) lorsqu'il est détecté qu'au moins l'un des fusibles (F1, F2, F3, Fn) est déclenché.

2. Répartiteur de courant selon la revendication 1, **caractérisé en ce que** l'unité d'évaluation et de commande (10) vérifie le courant (iT) passant dans le canal de rechange (EK1) pour détecter un événement de surintensité, dans lequel l'unité d'évaluation et de commande (10) évalue ledit au moins un fusible déclenché (F1, F2, F3, Fn) comme étant déclenché lorsqu'un événement de surintensité est présent, ou l'évalue comme étant un défaut lorsqu'aucun événement de surintensité n'est présent.

3. Répartiteur de courant selon la revendication 2, **caractérisé en ce que** l'unité d'évaluation et de commande (10) fait passer le commutateur semi-conducteur (T) à l'état conducteur et maintient le trajet de courant redondant par l'intermédiaire du canal de rechange (EK1) lorsque le fusible déclenché (F1, F2, F3, Fn) est évalué comme étant défectueux, ou fait passer le commutateur semi-conducteur (T) à l'état bloquant et coupe le trajet de courant redondant par l'intermédiaire du canal de rechange (EK1) lorsque le fusible déclenché (F1, F2, F3, Fn) est évalué comme étant déclenché.

4. Répartiteur de courant selon l'une des revendications 1 à 3, **caractérisé en ce qu'**il est prévu un canal de rechange (EK1) pour un nombre pouvant être prédéfini de canaux de charge (LK1, LK2, LK3, LKn).

5. Répartiteur de courant selon l'une des revendications 1 à 4, **caractérisé en ce que** l'unité d'évaluation et de commande (10) détermine une première tension (Uref) en amont, et une deuxième tension (UB1, UB2, UB3, UBn) en aval du fusible (F1, F2, F3, Fn) respectif, et les compare l'une à l'autre.

6. Répartiteur de courant selon la revendication 5, **caractérisé en ce que** le circuit d'évaluation et de commande (10) détecte un fusible déclenché (F1, F2, F3, Fn) lorsque la première tension (Uref) est différente de la deuxième tension (UB1, UB2, UB3, UBn).

7. Système de sécurité (1, 1A) pour un véhicule, comprenant une source de tension (5) qui fournit une tension de réseau de bord (UG) du véhicule par l'intermédiaire d'une ligne principale (A), et un répartiteur de courant (3, 3A) qui applique la tension de réseau de bord à plusieurs charges connectées (L1, L2, L3, Ln), **caractérisé en ce que** le répartiteur de courant (3, 3A) est réalisé selon au moins l'une des revendications 1 à 6.

8. Système de sécurité selon la revendication 7, **caractérisé en ce qu'**au moins une fonction de sécurité (7) fait passer cycliquement et/ou en présence d'au moins un critère prédéterminé l'unité d'évaluation et de commande (10) dans un mode de vérification dans lequel l'unité d'évaluation et de commande (10) vérifie le bon état de fonctionnement des fusibles (F1, F2, F3, Fn) et du fusible électronique (EF1) du répartiteur de courant (3, 3A).

9. Système de sécurité selon la revendication 8, **caractérisé en ce que** l'unité d'évaluation et de commande (10) rend conducteur le commutateur semi-conducteur (T) après une vérification des fusibles (F1, F2, F3, Fn) et détecte et évalue un courant correspondant (iT) passant dans le canal de rechange (EK1) lorsqu'il est évalué que tous les fusibles (F1, F2, F3, Fn) sont en bon état de fonctionnement, dans lequel un courant détecté (iT) passant dans le canal de rechange (EK1) représente un commutateur semi-conducteur (T) non défectueux.

10. Système de sécurité selon la revendication 8 ou 9, **caractérisé en ce que** l'unité d'évaluation et de commande (10) signale un fusible (F1, F2, F3, Fn) défectueux et/ou un commutateur semi-conducteur (T) défectueux à ladite au moins une fonction de sécurité (7), dans lequel, dans le cas où au moins un fusible (F1, F2, F3, Fn) est évalué comme étant défectueux, la fonction de sécurité (7) fait passer le circuit d'évaluation et de commande (10) dans un mode de fonctionnement dans lequel l'unité d'évaluation et de commande (10) surveille le courant (iT) passant dans le canal de rechange (EK1) et maintient le trajet de courant redondant par l'intermédiaire du canal de rechange (EK1) ou le coupe en cas d'événement de surintensité.
